# EUROPEAN PATENT SPECIFICATION

(11) **EP 4 493 864 B1**
(45) Date of publication and mention of the grant of the patent: **07.10.2026**
(21) Application number: 23709983.3
(22) Date of filing: 07.03.2023
(51) Int. Cl.: F24H 4/04, F24H 15/136, F24H 15/176

(54) **METHOD FOR MONITORING FROST IN A HEAT PUMP SYSTEM**
VERFAHREN ZUR ÜBERWACHUNG VON FROST IN EINER WÄRMEPUMPENANLAGE
MÉTHODE DE SURVEILLANCE DU GEL DANS UN SYSTÈME DE POMPE À CHALEUR

(30) Priority: 14.03.2022 EP 22161873; 21.03.2022 EP 22163167; 21.03.2022 EP 22163164; 01.04.2022 EP 22166330; 01.04.2022 EP 22166331; 01.04.2022 EP 22166332; 06.12.2022 EP 22211748
(43) Date of publication of application: 22.01.2025
(73) Proprietor: BDR Thermea Group B.V., 7332 BD Apeldoorn (NL)
(72) Inventor: LEMETAYER, Didier, 7332 BD Apeldoorn (NL); ANTOINE, Florian, 7332 BD Apeldoorn (NL)
(74) Representative: Grabovac, Dalibor
(86) International application number: PCT/EP2023/055643
(87) International publication number: WO 2023/174742

(56) References cited:
- CN-A- 107 091 548
- CN-A- 107 576 111
- CN-A- 111 879 037
- US-A1- 2021 333 039

## Description

The invention relates to a heat pump system and a method for monitoring frost in the heat pump system. In addition, the invention relates to a computer program product.

Heat pump systems use refrigerants to transport heat from a source medium (typically air or water) to a destination medium (typically air or water).

In a first heat exchanger (evaporator) heat is transferred from the source medium to the refrigerant. The refrigerant is circulated through a network of piping and components, including at least a first heat exchanger, a compressor, an expansion valve and a second heat exchanger (condenser). In the second heat exchanger, heat is transferred from the refrigerant to the destination medium.

One of the ways of characterising heat pump systems is related to the source medium that is used. The main types are air source heat pump systems and water source heat pump systems.

During heat transfer in the evaporator, the refrigerant heats up and the source medium cools down. The source medium enters at a temperature Tₐ and leaves at a temperature T_{b}, with Tₐ > T_{b}. The pressure of the source medium may also change during this passage through the evaporator.

During this energy transfer, the source medium may reach a temperature such that moisture, either in the environment of the evaporator or directly in the source medium, can reach a temperature such that the temperature is lower than the solidification temperature, causing frost or icing.

The frost that forms will at least partially cover part of the evaporator, thus reducing the exchange surface and thus the performance of the heat pump system.

In order to ensure proper functioning, heat pump systems are defrosted when frost is detected. Defrosting can be done in several ways. For instance, warm refrigerant can be passed through the evaporator via a bypass system to warm up and defrost the evaporator. Alternatively, natural defrosting can be used, in which defrosting is allowed to take place naturally by convection with the source medium. During defrosting, no heat transfer from the source medium to the refrigerant and subsequently to the source medium is achieved. This results in a drop in system performance, a decrease in operating time, a partial stoppage of the heat pump system and therefore dissatisfaction or discomfort for the user.

In order to decide to initiate defrosting, frosting needs to be detected. Frost may be detected by measuring a temperature difference of the source medium between an inlet and an outlet of the heat exchanger, or a temperature difference of the refrigerant between an inlet and an outlet of the heat exchanger. If the temperature difference is below a threshold or the heat exchange performance is deemed insufficient, it is considered that heat exchange is not good enough and that one of the likely causes is frosting. Defrosting may then be activated.

Temperature measurement may be carried out using contact temperature sensors. Such temperature sensors measure temperature in a localised manner and require direct contact between the temperature sensor and the element whose temperature is to be measured.

The current approach of measuring temperature difference has its limitations: the identification of frosting takes place after the negative consequences of frosting are already present. Also, as a consequence thereof, defrosting takes a lot of time, as the frost is already largely present.

Furthermore, frosting is identified indirectly, i.e. as an assumed cause of the drop in performance. However, other causes may also lead to a situation in which the temperature difference does not reach the threshold, such as a partial or total obstruction of the source medium, a failure of a temperature sensor, leakage of refrigerant or any other medium, an issue with the fan or a problem with the correct reading (poor contact or positioning of the probe with the medium being measured). Initiating defrosting will in such cases not resolve the problem and could even worsen it.

US10900697B2 describes the use of a detection device for detecting icing conditions of a heat exchanger. Such a detection device optionally comprises a temperature sensor or a camera and/or a memory unit of historically collected measured values.

CN111879037A describes an air source heat pump chiller with defrosting method using a camera to monitor the growth of a frost layer on the fins of a heat exchanger from minor frost core period, through a frost layer growth period, to a frost layer complete formation period. Simultaneous with this, detected readings from several monitors, including a photoelectric frost sensor 9.

CN107576111A describes an air source heat pump with defrost control using a thermal camera to acquire thermal images of the outer surface of a heat exchanger. Further running of a defrost program is based on analysis of the thermal images.

CN107091548A describes an air source heat pump with frost control method which uses a camera to image an outdoor heat exchanger and uses machine learning to interpret the images and start the defrost protocol. The machine learning algorithm is expected to improve over time.

US2021/0333039A1 describes an air conditioner with defrost control using a camera and machine learning algorithms to interpret camera data and apply defrost control.

The object of the invention is therefore to provide an improved manner to detect frost in a heat pump system. This may be performed by a Heat pump system comprising a camera and a control unit configured to perform a method as further described, and wherein the heat pump system comprises an air duct, running from an air duct entrance to an air duct exit, and an evaporator, the evaporator being positioned at a mid-section of the air duct, and a fan arranged to generate an air flow through the evaporator from the air duct entrance to the air duct exit, wherein the cross-sectional areas of the air duct entrance and of the air duct exit are smaller than the cross-sectional area of the mid-section of the air duct, and the camera is positioned inside the air duct but outside the air flow.

The object is further solved by a method for monitoring frost in a heat pump system, the method comprising
- obtaining an image of a surface area of the heat pump system with a camera,
- comparing the image with a predefined reference,
- deciding to start a defrosting cycle dependent on the comparison between the image and the predefined reference.

The method may be carried out by a camera, possibly in combination with a control unit of the heat pump system. Obtaining an image is done by a camera, while the further steps of the method may be carried by the camera or by the control unit. The camera and the control unit may be provided in a single module, the control unit may be integrated into a main electronic board of the heat pump system, or the control unit and the camera may be integrated into a specific electronic board, which is able to communicate with the main electronic board of the heat pump system. The camera is configured to capture an image of the surface area of the heat pump system and transmit this image to the control unit. The control unit is configured to receive such image, perform a comparison with a predetermined reference and decide to start a defrosting cycle dependent on the outcome of the comparison. The control unit and the camera may be separate devices that are configured to communicate with each other. Alternatively, the control unit and the camera may be integrated.

The surface area of the heat pump system preferably is a surface of a heat exchanger, in particular the evaporator. Alternatively, the surface area may be or comprise part of the piping connections connected to the evaporator. However, the surface of the evaporator is usually the first surface to grow frost on and the easiest to detect frost on.

The method provides for reducing the impact of frost on a heat pump system by contactless monitoring a surface of the heat pump system. By comparing the obtained image to a reference, a decision can be taken to start a defrosting cycle or not.

The described method allows to identify frost early, i.e. when only little frost is present or even before the first frost is present. This allows for early and short defrosting times. This improves the energy performance of the product, shortens the operating time and ensures better user comfort.

The described method further allows to monitor and analyse a large surface area of the heat pump system, instead of only obtaining temperature measurements of one or more local measurement points, such is for instance the case when using contact measurement sensors.

The method allows to measure or monitor the actual frost that is building up, and therefore makes it possible to implement efficient and proportionate defrosting. This is not possible with current solutions, since these are based on identifying frosting based on reduced heat exchange performance or a measured temperature difference, but these are only indications of possible presence of frost. By obtaining an image of a surface area of the heat pump system with a camera it possible to start a defrosting cycle dependent on the amount of frost being determined, or in other words, dependent on the determined differences between the image and the predefined reference. A decision may be taken to initiate a longer or a shorter defrosting cycle, instead of initiating a standard defrosting cycle which may be too short, (resulting in not all the frost being removed or frost reappearing relatively quicky) or too long (resulting in too long a downtime and/or unneeded loss of thermal energy).

As defrosting can be started earlier, when only little frost is present, the amount of condensate to be discharged from the defrosting process is also reduced. By avoiding a big volume of condensate to be generated in a short time, the problem of overflowing condensate containers and the spread of condensate on components of the heat pump system that are not suitable for condensate (water) contact, such as electrical connections and components) is avoided.

The solution allows direct identification of icing by measuring the phenomena that cause it, not its consequences. This allows a more accurate diagnosis of the system's behaviour and does not indicate a diagnosis of natural icing when it is a system failure.

There is no need to attach a temperature sensor to surface of the heat exchanger. Placing a temperature sensor may create a barrier in the flow of the source medium and consequently reduce the heat exchange performance of the heat exchanger by creating a pressure drop or by reducing the available heat exchange surface. The camera, as now proposed to be used, can be positioned away from the surface area of the at least one heat exchanger to be monitored and is positioned inside the air duct but outside the flow of the source medium. The operation of the heat pump system is thus not disturbed.

Furthermore, a camera allows to monitor a surface area of the heat exchanger, rather than a local dedicated position on the surface area as with using a temperature sensor attached to the surface.

Using a camera also results in an improved reactivity to changing conditions, while a standard temperature sensor attached to the surface.

According to the invention, the heat pump system comprises an evaporator and according to an embodiment the surface area of the heat pump system is a surface area of the evaporator.

The evaporator may be an air-refrigerant heat exchanger.

According to an embodiment the surface area of the evaporator comprises
- an inlet area of the evaporator, and/or
- an outlet area of the evaporator, and/or
- at least part of an outer surface of the evaporator, and/or
- an inner surface of the evaporator.

Preferably, the surface of which an image is obtained is or comprises the surface subject to the earliest frosting. This area is dependent on the product design but corresponds to the area of the exchanger where the lowest temperature measurements are achieved at the surface. It is noted that frosting doesn't necessarily first appear on the outlet area of the evaporator where air is leaving the evaporator with a lower temperature, as frosting also depends on other factors, like pressure and humidity.

The most relevant surface area of the evaporator is/are the outer surface(s) of the evaporator. The outer surfaces are usually opposite to each other and are in a horizontal or vertical orientation when in use.

According to an embodiment the camera is an optical camera.

According to an embodiment the image is an optical image and the predefined reference is an optical reference image of the surface area.

The term optical camera is used to refer to a camera sensitive to wavelengths in the range of 380 - 750 nm, or a subrange thereof.

The optical camera may be a digital camera. The optical camera is configured to record, analyse, or send / air images to a control unit of the heat pump system without there being any physical contact between the camera and the surface area of the heat exchanger. A light source may be provided to ensure the surface area of the heat pump system of which an image is to be obtained is well lit, also during nights.

The predefined reference may be images of the same surface of the heat exchanger. The predefined reference may be an image with or without frost, and the comparison may be done by determining a difference or resemblance with the predefined reference.

The predefined reference may also be a colour value of the image pixels of the surface area of the heat exchanger.

For an optical camera, comparing the optical image obtained to the optical reference image is about identifying a deformation in the optical image. For instance, in case of an surface area of the evaporator, frost may be form and as result thereof the space between evaporator fins is reduced or even closed by the ice. The comparing may thus corresponds to changes of the space available between two successive evaporator fins.

The predefined reference may also be a set of reference parameters or rules based on a learning logic. With the use of artificial intelligence, the reference parameters may be obtained by providing a batch of learning images with labels indicating whether or not icing is present and/or whether or not a decision to start a defrosting cycle is to be taken. Based on these learning images with labels, the control unit can learn and define rules to detect when to start and/or stop defrosting when an image is obtained.

According to an embodiment the camera is a thermal camera.

The use of an infrared camera to capture an image, i.e. to measure temperatures of the surface of the heat pump system of which an image is obtained, has the advantage that there is no dependency on changes in light conditions, the appearance of external events, like dust, leaves, water, system vibration, etc. on the heat exchanger surface or on the camera.

The thermal camera allows the temperature to be measured over a field of points. These measurements are then compared to reference temperature values for which frosting is known to appear.

In order to improve the reliability of the method, a set of values are measured by the thermal camera and a decision to start a defrosting cycle is only taken if a minimum number of points are below the reference temperature values. The same applies to the detection of the end of defrosting, as will be explained in more detail below.

According to an embodiment the image is a thermal image and the predefined reference is
- a reference temperature value, and/or
- a thermal reference image.

The term thermal camera is used to refer to a camera sensitive to wavelengths in the range of 1000nm - 14.000nm, or a subrange thereof. Thermal cameras are also known as infrared cameras. Thermal cameras are capable of measuring a temperature at several points or at an entire surface without there being any physical contact between the camera and the surface to be measured. Thermal camera's functioning is based on the quantification of the radiative energy emitted by the measured object. Based on the measurement of the energy emitted by the body, the temperature of the body can be determined.

This results in a thermal image, which may be compared to a reference temperature value, and/or a thermal reference image.

In case of a thermal camera the thermal image may be a map of temperature measurements. A reference temperature value Tᵢ is defined. If the thermal image identifies a number or rate of pixels or measurement values at which the number of temperature measurements below this reference temperature Tᵢ is exceeded, it is decided to start a defrosting cycle.

The reference temperature value may be predetermined. For instance, the reference temperature may be 0°C.

The thermal reference image may be an image of the same area having a lowest acceptable temperature. It is noted that the lowest acceptable temperature may be different throughout the surface area of the heat exchanger.

When the comparison results in a difference or resemblance that meets a predetermined threshold value or meets the reference temperature, it is considered that there is a sufficiently high risk of frosting or frost being present to start the defrosting cycle. This threshold is dependent on the fluid present, the humidity of the environment and the air pressure.

The decision to start a defrosting cycle dependent on the comparison between the image and the predefined reference may be based on test results, theoretical calculations and learnings from real life learnings. Further parameters may be taken into account, such as humidity of the environment, type of refrigerant used, air pressure and the source fluid present. Further parameters may be the temperature of the refrigerant at the inlet and outlet, temperature of the air at the inlet and outlet, location of the heat pump system (e.g. air ambient or outdoor ducting or exhaust air from the ventilation system for a heat pump water heater), country or region of installation (and so knowledge of humidity). The parameters may be fixed in the heat pump system (i.e. in the control unit and/or camera), may be set upon installation (e.g. air ducting or not) or may be variables measured by sensors (temperature, pressure, humidity). All these parameters, test results, theoretical calculations and learning may result in a minimum defrost value that is used to take the decision to start a defrosting cycle.

The parameters and thresholds used may be different for different heat pump systems. According to an embodiment the method further comprises carrying out a defrosting cycle, the defrosting cycle being one or more of:
- circulating warm refrigerant through parts of the heat pump system,
- temporarily interrupting operation of at least part of the heat pump system.

The parts of the heat pump system may comprise the components comprising the surface area of the heat pump system of which an image is obtained from, in particular the evaporator.

The defrosting cycle may comprise actuation of valves as to change the refrigerant path in the network of piping carrying refrigerant. In particular, a by-pass or defrosting flow path may be opened to cause relatively warm refrigerant to be circulated through the parts of the heat pump system to warm these parts of the heat pump system and cause defrosting.

At least part of the heat pump system may be interrupted, in particular the cycling of refrigerant. In operation, refrigerant is cycled through a network of piping and components, including at least a first heat exchanger (evaporator), a compressor, an expansion valve and a second heat exchanger (condenser), which cycling may be temporarily interrupted. Other parts of the heat pump system may continue to be operating, in particular a fan configured to generate an air flow through the evaporator. The fan may continued to be operated to provide a better convection in order to help the defrosting.

According to an embodiment the method further comprises
- obtaining a further image of a further surface area of the heat pump system with a further camera,
- comparing the further image with a predefined reference,
- deciding to start a defrosting cycle dependent on the comparison between the further image and the predefined reference.

The camera and the further camera may be directed to two opposite surfaces of the heat exchanger, in particular to two opposite surfaces of the evaporator through which the air flow enters and leaves the evaporator. These two surfaces may be referred to as the air entrance area and the air exit area. These two surfaces are the two largest surfaces of the evaporator and are opposite each other. Between them are the fins and tubes of the heat exchanger.

According to an embodiment the method comprises
- starting the defrosting cycle,
- obtaining an image of a surface area of the heat pump system with a camera during the defrosting cycle,
- comparing the image with a predefined reference,
- deciding to stop the defrosting cycle dependent on the comparison between the image and the predefined reference.

The method may further comprise stopping the defrosting cycle.

This provides the advantage that the defrosting cycle can be executed as long as required, i.e. not too short, as this could result in not all the frost being removed or frost reappearing relatively quicky and also not too long, as this unnecessarily increases the downtime of the heat pump system and/or loss of thermal energy.

It will be understood that all features described with respect to deciding to start a defrosting cycle may be applicable to deciding to stop the defrosting cycle, including the selection of the surface area (surface area of the evaporator), use of an optical or thermal camera, the predefined reference, and the use of a further camera to obtain a further image.

According to an aspect of the invention there is provided a heat pump system comprising a camera and a control unit configured to perform the method according to the claims.

The camera may be an optical camera or a thermal camera.

According to an embodiment the heat pump system is an air source heat pump system.

According to an embodiment the heat pump system comprises an air duct and an evaporator, the evaporator being positioned in the air duct, wherein the camera is positioned
- inside the air duct or
- at an air duct entrance and/or air duct exit, or
- outside the air duct or
- inside the air duct but outside the air flow.

The air duct may be configured to guide an air flow from an air duct entrance towards an air duct exit. A fan may be provided inside or close to the air duct to generate such an air flow. The fan may for instance be positioned at the air duct entrance or air duct exit.

The evaporator may be positioned in the air duct such that the air flow flows through the evaporator to allow the air flow to exchange heat with a refrigerant flowing through the evaporator. The evaporator may have an air entrance area and air exit area through which the air flow enters and exits the evaporator respectively.

The air duct may have a varying cross-sectional area. The cross-sectional areas of the air duct entrance and the air duct exit are smaller than a cross-sectional area of a mid-section of the air duct, i.e. where the evaporator is positioned. This allows to position the camera inside the air duct, close to the air duct entrance or air duct exit, but outside the cross-sectional area of the air duct entrance or air duct exit. This has the advantage that the camera may be positioned inside the air duct but outside the air flow. This has the advantage that disturbance of the air flow by the camera is minimal. The cross-sectional areas referred to are all perpendicular to the direction of the air flow.

The camera may be directed towards the evaporator to obtain an image of a surface area of the evaporator and is preferably directed such that the surface area of the evaporator comprises at least part of the air entrance area and/or air exit area.

The camera may also be positioned at the air duct entrance and/or air duct exit.

The camera will be positioned in such a way that it can film a surface of the exchanger.

Further provided is a computer program product comprising instructions which cause the heat pump system to execute the steps of any one of the methods described.

In the figures, the subject-matter of the invention is schematically shown, wherein identical or similarly acting elements are usually provided with the same reference signs.
- Figure 1: shows a flow diagram according to an embodiment,
- Figure 2, 3: schematically show views of a heat pump system according to an embodiment,
- Figure 4: schematically shows a heat pump system according to an alternative embodiment.

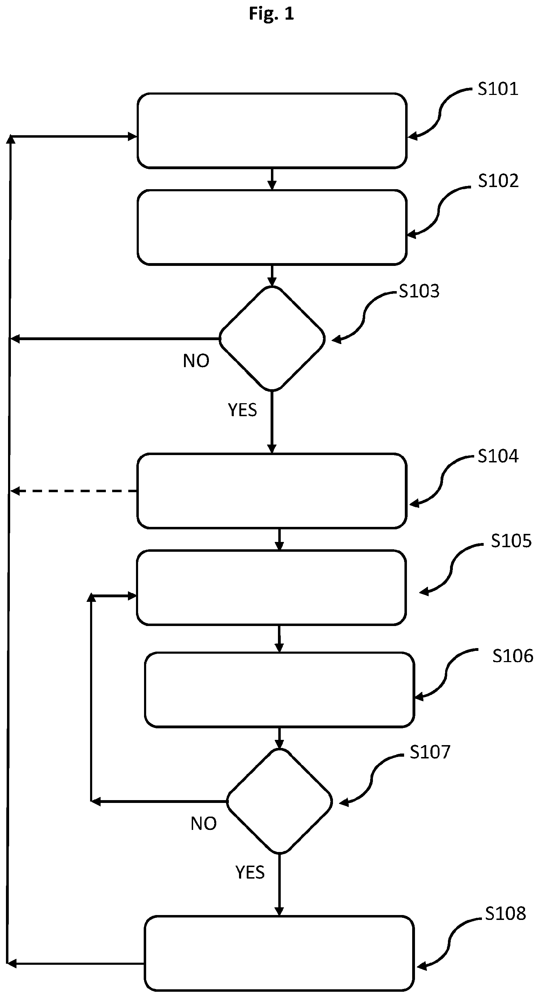

With reference to Figure 1, a method is provided for monitoring frost in a heat pump system. The method comprises obtaining an image of a surface area of the heat pump system with a camera S101, followed by comparing the image with a predefined reference S102. Next, a decision is taken to start a defrosting cycle dependent on the comparison between the image and the predefined reference S103. If a decision is taken not start the defrosting cycle, the method may return to step S101, optionally with a predetermined delay time. If a decision is taken to start the defrosting cycle, the method continues to the defrosting cycle S104.

Optionally, the method may continue with obtaining an image of a surface area of the heat pump system with a camera during the defrosting cycle S105, followed by comparing the image with a predefined reference S106. Next, a decision may be taken to stop the defrosting cycle dependent on the comparison between the image and the predefined reference S107. If a decision is taken not stop the defrosting cycle, the method may return to step S105, optionally with a predetermined delay time. If a decision is taken to stop the defrosting cycle, the method may continue to stop the defrosting cycle S108 and return to S101.

If steps S105-S108 are omitted, performing the defrosting cycle S104 may be completed and the method may return to S101, indicated by the dotted arrow in Fig. 1.

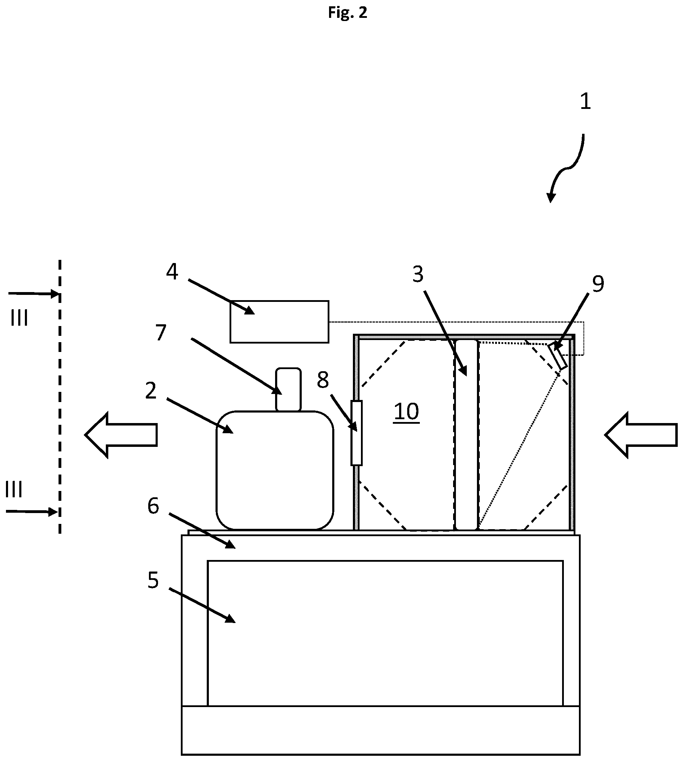

Fig. 2 shows part of a heat pump system 1, comprising a compressor 2, a heat exchanger, i.e. an evaporator 3, a control unit 4, a safety pressure sensor 7 and a water storage tank 5. The compressor 2 compresses refrigerant as part of the heat cycle of the refrigerant. The evaporator 3 allows the refrigerant to collect heat from the air. The control unit 4 is configured to control the different elements of the heat pump system 1 to operate. The water storage tank 5 may store water that is heated up by the heat pump system 1 Further shown in Fig. 2 is the heat pump compartment base 6.

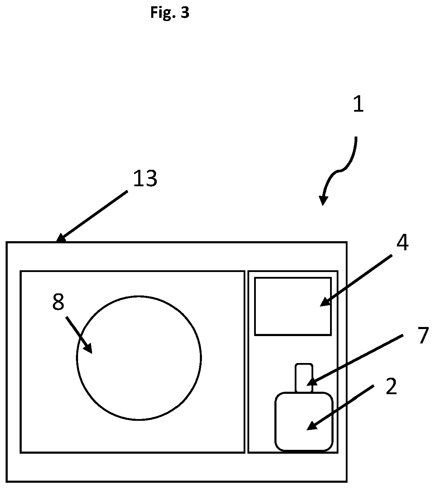

Fig. 3 schematically shows a side view of part of the heat pump system 1, as indicated by arrows III in Fig. 2. Fig. 3 also showing casing 13 comprising some elements of the heat pump system 1.

The control unit 4 may be any kind of suitable control unit, for instance a computer running specific software or an electronic control board comprising hardware components.

The heat pump system 1 comprises an air duct 10. The air duct 10 runs from an air duct entrance 11 to an air duct exit 12. A fan 8 is provided to generate an air flow (indicated by the big arrows) through the evaporator 3 from the air duct entrance 11 to the air duct exit 12 to enable air to exchange heat with the refrigerant running through the evaporator 3. The fan is positioned at the air duct exit 12.

It will be understood that not all components and connections of the heat pump system 1 are shown in Fig. 2. For instance, the piping through which the refrigerant is conveyed is not shown in Fig. 2 for reasons of clarity.

Further provided is a camera 9. The control unit 4 and camera 9 are configured to communicate with each other, as schematically indicated by the dashed line.

The camera 9 may be an optical camera or a thermal camera. The camera 9 is positioned such that it captures part of an outer surface of the evaporator 3. The viewing angle of the camera 9 is schematically depicted in Fig. 2 with two dotted lines.

As shown in Fig. 2, the camera 9 is positioned inside the air duct 10. The camera is positioned outside the air flow to minimize disturbing the air flow. This is possible because the air duct 10 has a varying cross-sectional area. The cross-sectional areas of the air duct entrance 11 and the air duct exit 12 is smaller than a cross-sectional area of a mid-section of the air duct 10, i.e. where the evaporator 3 is positioned. The cross-sectional area of the air flow is schematically indicated by the dashed lines.

This allows to position the camera 9 inside the air duct 10, close to the air duct entrance 11 or air duct exit 12, but outside the cross-sectional area of the air duct entrance 11 or air duct exit 12.

The cross-sectional areas referred to are all perpendicular to the direction of the air flow.

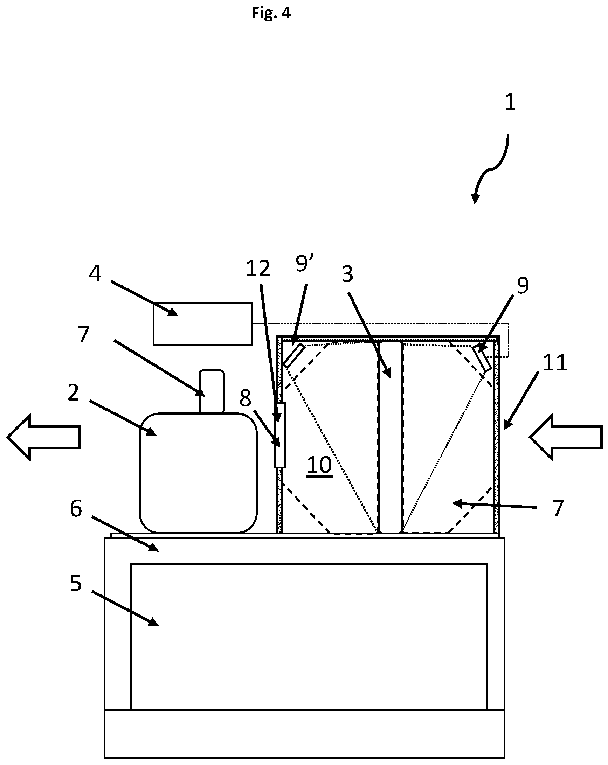

Fig. 4 schematically shows a heat pump system 1 according to an alternative embodiment, wherein a further camera 9' is provided configured to obtain a further image of a further surface area of the heat pump system, in particular a further surface area of the evaporator.

Further provided is a method for defrosting a heat pump system, the method comprising
- starting a defrosting cycle,
- obtaining an image of a surface area of the heat pump system with a camera during the defrosting cycle,
- comparing the image with a predefined reference,
- deciding to stop the defrosting cycle dependent on the comparison between the image and the predefined reference.

Further provided is a heat pump system comprising a camera and a control unit configured to perform the method for defrosting a heat pump system and a computer program product comprising instructions which cause the heat pump system to execute the steps of the method for defrosting a heat pump system.

The invention is not limited to the embodiments shown in the drawings and described hereinbefore, which may be varied in different manners within the scope of the claims.

### Reference Signs

- 1.: Heat pump system
- 2.: Compressor
- 3.: Heat exchanger/evaporator
- 4.: Control unit
- 5.: Water storage tank
- 7.: Safety pressure sensor
- 6.: Heat pump comportment base
- 8.: Fan
- 9.: Camera
- 10.: Air duct
- 11.: Air duct entrance
- 12.: Air duct exit
- 13.: Casing

## Claims

1. Heat pump system (1) comprising a camera (9) and a control unit (4) configured to perform the method according to any one of claims 3 to 12, wherein the heat pump system (1) comprises
- an air duct (10), running from an air duct entrance (11) to an air duct exit (12), and
- an evaporator (3), the evaporator (3) being positioned at a mid-section of the air duct (10), and
- a fan (8) arranged to generate an air flow through the evaporator from the air duct entrance (11) to the air duct exit (12), **characterised in that**
- the cross-sectional areas of the air duct entrance (11) and of the air duct exit (12) are smaller than the cross-sectional area of the mid-section of the air duct, and
- the camera (9) is positioned inside the air duct (10) but outside the air flow.

2. Heat pump system (1) according to claim 1, wherein the heat pump system (1) is an air source heat pump system.

3. Method for monitoring frost in the heat pump system (1) of claim 1, the method comprising
- obtaining an image of a surface area of the heat pump system (1) with the camera (9) (S101),
- comparing the image with a predefined reference (S102),
- deciding to start a defrosting cycle dependent on the comparison between the image and the predefined reference (S103).

4. Method according to claim 3, wherein the surface area of the heat pump system is a surface area of the evaporator (3).

5. Method according to claim 4, wherein the surface area of the evaporator (3) comprises
- an inlet area of the evaporator (3), and/or
- an outlet area of the evaporator (3), and/or
- at least part of an outer surface of the evaporator, and/or
- an inner surface of the evaporator.

6. Method according to any of claims 3 to 5, wherein the camera (9) is an optical camera.

7. Method according to claim 6 wherein the image is an optical image and the predefined reference is an optical reference image of the surface area.

8. Method according to any one of the claims 3 to 7, wherein the camera (9) is a thermal camera.

9. Method according to claim 8, wherein the image is a thermal image and/or the predefined reference is
- a reference temperature value, and/or
- a thermal reference image.

10. Method according to any of claims 3 to 9, wherein the method further comprises carrying out a defrosting cycle, the defrosting cycle being one or more of:
- circulating warm refrigerant through parts of the heat pump system (1),
- temporarily interrupting operation of at least part of the heat pump system.

11. Method according to any of claims 3 to 10, the method further comprising
- obtaining a further image of a further surface area of the heat pump system (1) with a further camera (9'),
- comparing the further image with a predefined reference,
- deciding to start a defrosting cycle dependent on the comparison between the further image and the predefined reference.

12. Method according to any of claims 3 to 11, wherein the method further comprises:
- starting the defrosting cycle (S104),
- obtaining an image of a surface area of the heat pump system (1) with a camera (9) during the defrosting cycle (S105),
- comparing the image with a predefined reference (S106),
- deciding to stop the defrosting cycle dependent on the comparison between the image and the predefined reference (S107).

13. Computer program product comprising instructions which cause the heat pump system (1) of any one of claims 1 to 2 to execute the steps of the method of any one of the claims 3- 12.

## Patentansprüche

1. Wärmepumpenanlage (1), umfassend eine Kamera (9) und eine Steuereinheit (4), die konfiguriert ist, um das Verfahren nach einem der Ansprüche 3 bis 12 durchzuführen, wobei die Wärmepumpenanlage (1) Folgendes umfasst:
- einen Luftkanal (10), der von einem Luftkanaleingang (11) zu einem Luftkanalausgang (12) verläuft, und
- einen Verdampfer (3), wobei der Verdampfer (3) in einem mittleren Abschnitt des Luftkanals (10) angeordnet ist, und
- ein Gebläse (8), das angeordnet ist, um einen Luftstrom durch den Verdampfer vom Luftkanaleingang (11) zum Luftkanalausgang (12) zu erzeugen, **dadurch gekennzeichnet, dass**
- die Querschnittsflächen des Luftkanaleingangs (11) und des Luftkanalausgangs (12) kleiner sind als die Querschnittsfläche des mittleren Abschnitts des Luftkanals, und
- die Kamera (9) im Inneren des Luftkanals (10), jedoch außerhalb des Luftstroms angeordnet ist.

2. Wärmepumpenanlage (1) nach Anspruch 1, wobei die Wärmepumpenanlage (1) eine Luft-Wasser-Wärmepumpenanlage ist.

3. Verfahren zur Überwachung von Frost in der Wärmepumpenanlage (1) nach Anspruch 1, wobei das Verfahren Folgendes umfasst:
- Erhalten eines Bildes einer Oberfläche der Wärmepumpenanlage (1) mit der Kamera (9) (S101),
- Vergleichen des Bildes mit einer vordefinierten Referenz (S102),
- Entscheiden zum Starten eines Abtauzyklus in Abhängigkeit vom Vergleich zwischen dem Bild und der vordefinierten Referenz (S103).

4. Verfahren nach Anspruch 3, wobei die Oberfläche der Wärmepumpenanlage eine Oberfläche des Verdampfers (3) ist.

5. Verfahren nach Anspruch 4, wobei die Oberfläche des Verdampfers (3) Folgendes umfasst:
- eine Einlassfläche des Verdampfers (3) und/oder
- eine Auslassfläche des Verdampfers (3) und/oder
- mindestens einen Teil der Außenfläche des Verdampfers und/oder
- eine Innenfläche des Verdampfers.

6. Verfahren nach einem der Ansprüche 3 bis 5, wobei die Kamera (9) eine optische Kamera ist.

7. Verfahren nach Anspruch 6, wobei das Bild ein optisches Bild ist und die vordefinierte Referenz ein optisches Referenzbild der Oberfläche ist.

8. Verfahren nach einem der Ansprüche 3 bis 7, wobei die Kamera (9) eine Wärmebildkamera ist.

9. Verfahren nach Anspruch 8, wobei das Bild ein Wärmebild ist und/oder die vordefinierte Referenz Folgendes ist:
- ein Referenztemperaturwert und/oder
- ein Referenzwärmebild.

10. Verfahren nach einem der Ansprüche 3 bis 9, wobei das Verfahren ferner das Durchführen eines Abtauzyklus umfasst, wobei der Abtauzyklus eines oder mehrere der Folgenden ist:
- Umwälzen von warmem Kühlmittel durch Teile der Wärmepumpenanlage (1),
- vorübergehendes Unterbrechen des Betriebs mindestens eines Teils der Wärmepumpenanlage.

11. Verfahren nach einem der Ansprüche 3 bis 10, wobei das Verfahren ferner Folgendes umfasst:
- Erhalten eines weiteren Bildes einer weiteren Oberfläche der Wärmepumpenanlage (1) mit einer weiteren Kamera (9'),
- Vergleichen des weiteren Bildes mit einer vordefinierten Referenz,
- Entscheiden zum Starten eines Abtauzyklus in Abhängigkeit vom Vergleich zwischen dem weiteren Bild und dem vordefinierten Referenzbild.

12. Verfahren nach einem der Ansprüche 3 bis 11, wobei das Verfahren ferner Folgendes umfasst:
- Starten des Abtauzyklus (S104),
- Erhalten eines Bildes der Oberfläche der Wärmepumpenanlage (1) mit einer Kamera (9) während des Abtauzyklus (S105),
- Vergleichen des Bildes mit einer vordefinierten Referenz (S106),
- Entscheiden zum Stoppen des Abtauzyklus in Abhängigkeit vom Vergleich zwischen dem Bild und der vordefinierten Referenz (S107).

13. Computerprogrammprodukt, umfassend Anweisungen, die die Wärmepumpenanlage (1) nach einem der Ansprüche 1 bis 2 veranlassen, die Schritte des Verfahrens nach einem der Ansprüche 3 bis 12 auszuführen.

## Revendications

1. Système de pompe à chaleur (1) comprenant une caméra (9) et une unité de commande (4) configurée pour exécuter la méthode selon l'une quelconque des revendications 3 à 12, dans lequel le système de pompe à chaleur (1) comprend
- un conduit d'air (10), qui va d'une entrée de conduit d'air (11) jusqu'à une sortie de conduit d'air (12), et
- un évaporateur (3), l'évaporateur (3) étant positionné au niveau d'une partie médiane du conduit d'air (10), et
- un ventilateur (8) prévu pour générer un flux d'air à travers l'évaporateur depuis l'entrée du conduit d'air (11) jusqu'à la sortie du conduit d'air (12), **caractérisé en ce que**
- les sections transversales de l'entrée du conduit d'air (11) et de la sortie du conduit d'air (12) sont plus petites que la section transversale de la partie médiane du conduit d'air, et
- la caméra (9) est positionnée à l'intérieur du conduit d'air (10) mais à l'extérieur du flux d'air.

2. Système de pompe à chaleur (1) selon la revendication 1, dans lequel le système de pompe à chaleur (1) est un système de pompe à chaleur à source d'air.

3. Méthode de surveillance du gel dans le système de pompe à chaleur (1) selon la revendication 1, la méthode comprenant
- l'obtention d'une image d'une surface du système de pompe à chaleur (1) avec la caméra (9) (S101),
- la comparaison de l'image avec une référence prédéfinie (S102),
- la décision de démarrer un cycle de dégel en fonction de la comparaison entre l'image et la référence prédéfinie (S103).

4. Méthode selon la revendication 3, dans laquelle la surface du système de pompe à chaleur est une surface de l'évaporateur (3).

5. Méthode selon la revendication 4, dans laquelle la surface de l'évaporateur (3) comprend
- une zone d'entrée de l'évaporateur (3), et/ou
- une zone de sortie de l'évaporateur (3), et/ou
- au moins une partie de la surface extérieure de l'évaporateur, et/ou
- une surface intérieure de l'évaporateur.

6. Méthode selon l'une quelconque des revendications 3 à 5, dans laquelle la caméra (9) est une caméra optique.

7. Méthode selon la revendication 6, dans laquelle l'image est une image optique et la référence prédéfinie est une image de référence optique de la surface.

8. Méthode selon l'une quelconque des revendications 3 à 7, dans laquelle la caméra (9) est une caméra thermique.

9. Méthode selon la revendication 8, dans laquelle l'image est une image thermique et/ou la référence prédéfinie est
- une valeur de température de référence, et/ou
- une image thermique de référence.

10. Méthode selon l'une quelconque des revendications 3 à 9, dans laquelle la méthode comprend en outre la réalisation d'un cycle de dégel, ce cycle de dégel étant un ou plusieurs de ce qui suit :
- la circulation d'un réfrigérant chaud à travers les parties du système de pompe à chaleur (1),
- l'interruption temporaire du fonctionnement d'au moins une partie du système de pompe à chaleur.

11. Méthode selon l'une quelconque des revendications 3 à 10, la méthode comprenant en outre
- l'obtention d'une image supplémentaire d'une autre surface du système de pompe à chaleur (1) avec une autre caméra (9'),
- la comparaison de l'image supplémentaire avec une référence prédéfinie,
- la décision de lancer un cycle de dégel en fonction de la comparaison entre l'image supplémentaire et la référence prédéfinie.

12. Méthode selon l'une quelconque des revendications 3 à 11, dans laquelle la méthode comprend en outre :
- le démarrage du cycle de dégel (S104),
- l'obtention d'une image d'une surface du système de pompe à chaleur (1) avec une caméra (9) pendant le cycle de dégel (S105),
- la comparaison de l'image avec une référence prédéfinie (S106),
- la décision d'arrêter le cycle de dégel en fonction de la comparaison entre l'image et la référence prédéfinie (S107).

13. Produit de programme informatique comprenant des instructions qui permettent au système de pompe à chaleur (1) selon l'une quelconque des revendications 1 à 2 d'exécuter les étapes de la méthode selon l'une quelconque des revendications 3 à 12.
